# EUROPÄISCHE PATENTANMELDUNG

(11) **EP 2 650 548 A2**
(43) Veröffentlichungstag der Anmeldung: **16.10.2013**
(21) Anmeldenummer: 13158867.5
(22) Anmeldetag: 13.03.2013
(51) Int. Cl.: F15B 19/00, B62D 5/09

(54) **Hydraulisches System, Verfahren zum Steuern eines derartigen hydraulischen Systems und mobile Arbeitsmaschine mit einem derartigen hydraulischen System**

(30) Priorität: 12.04.2012 DE 102012205940
(71) Anmelder: ROBERT BOSCH GMBH, 70442 Stuttgart (DE)
(72) Erfinder: Schmitz, David, 71638 Ludwigsburg (DE); Kaercher, Manfred, 70567 Stuttgart (DE)
(74) Vertreter: Maiß, Harald

(57) **Zusammenfassung**

Offenbart ist ein hydraulisches System mit einem Stellglied (2) in Form eines Lenkzylinders. Ein erster Anschluss (A1) des Stellglieds (2) zur Verstellung des Stellglieds in eine erste Richtung ist über eine erste Zuleitung (20) mit einer Druckmittelversorgung (44) verbindbar. Über eine zweite Zuleitung (24) ist ein zweiter Anschluss (A2) des Stellglieds (2) mit der Druckmittelversorgung verbindbar. Über eine jeweilige Rückleitung (22, 26) ist ein jeweiliger Anschluss (A1, A2) mit einer Druckmittelsenke (38) verbindbar. In einer jeweiligen Zuleitung (20, 24) und einer jeweiligen Rückleitung (22, 26) ist zumindest ein Ventil (48-62) zum Steuern eines Druckmittelvolumenstroms vorgesehen. Über eine Steuervorrichtung (68) ist über einen Drucksensor (90, 94) ein Systemdruck erfassbar, mit dem bei einer bestimmten Ansteuerung der Ventile auf Fehler der Ventile geschlossen werden kann.

## Beschreibung

Die Erfindung betrifft ein hydraulisches System gemäß dem Oberbegriff des Anspruchs 1, ein Verfahren zur Steuerung eines derartigen hydraulischen Systems und eine mobile Arbeitsmaschine mit einem derartigen hydraulischen System.

In dem Dokument EP 2 388 178 A2 ist ein derartiges hydraulisches System in Form einer elektrohydraulischen Lenkung offenbart. Diese hat einen als Gleichgangzylinder ausgebildeten Lenkzylinder mit einem Kolben, der zwei Zylinderkammern voneinander trennt. Eine jeweilige Zylinderkammer ist zur Druckmittelversorgung mit einer Zuleitung verbunden in denen jeweils fluidisch parallel ein erstes und ein zweites Schaltventil angeordnet ist. Über die Schaltventile der Zuleitungen ist eine Druckmittelversorgung der Zylinderkammern steuerbar. Des Weiteren ist jede Zylinderkammer mit einer Rückleitung verbunden, wobei in einer jeweiligen Rückleitung ebenfalls zwei Schaltventile fluidisch parallel angeordnet sind, über die eine Verbindung zu einem Tank auf- und zusteuerbar ist. Fällt ein Ventil aus, beispielsweise indem ein Ventilschieber eines Ventils in einer unbetätigten Stellung verklemmt, so wird dieses Ventil einfach durch das fluidisch parallel angeordnete Ventil ersetzt.

In sicherheitskritischen Anwendungen, wie in der vorstehend erläuterten elektrohydraulischen Lenkung, ist es notwendig, dass Fehler der Ventile bzw. der Schaltventile sicher erkannt werden können. Ein vorrichtungstechnischer Aufwand einer Fehlererkennung mit Positionssensoren für jedes Ventil ist äußerst aufwendig.

In der Druckschrift WO 2007/028863 A1 ist eine weitere elektrohydraulische Anordnung offenbart. Diese hat einen Hydrozylinder in Form eines Differentialzylinders mit einer einseitigen Kolbenstange, wobei ein mit der Kolbenstange verbundener Kolben zwei Zylinderkammern voneinander trennt. Ein Anschluss einer jeweiligen Zylinderkammer ist über eine jeweilige Zuleitung mit einer Druckmittelquelle verbunden. In einer jeweiligen Zuleitung sind hierbei Schaltventile fluidisch parallel angeordnet. Des Weiteren ist der Anschluss einer jeweiligen Zylinderkammer über eine Rückleitung mit einem Tank verbunden. In einer jeweiligen Rückleitung sind dabei ebenfalls Schaltventile fluidisch parallel angeordnet. Ventilschieber der Ventile der Zu- und Rückleitungen sind mit einer Feder in Richtung einer Schließstellung mit einer Federkraft beaufschlagt und sind über einen elektrischen Aktuator in eine Öffnungsstellung bringbar. Zur Erkennung, ob alle Ventile funktionsfähig sind, wird ein Selbsttest der Anordnung vorgenommen, der nicht während eines normalen Betriebs der Anordnung aktiv ist. Fällt ein Ventil aus, so wird dies vom System bei dem Selbsttest aufgrund von Druckänderungen erkannt, indem ein Druck an mehreren Stellen der elektrohydraulischen Anordnung abgegriffen wird und mit zuvor berechneten Größen verglichen wird. Nach der Fehlererkennung wird das ausgefallene Ventil durch eine neue Ansteuerung der übrigen Ventile ausgeglichen.

Diese Lösung hat den Nachteil, dass die elektrohydraulische Anordnung vorrichtungstechnisch aufwändig mit mehreren Drucksensoren zur Fehlererkennung ausgestaltet ist. Des weiteren ist bei einem Ausfall eines Ventils eine neue Ansteuerung der übrigen Ventile regelungs- und steuerungstechnisch vergleichsweise aufwändig.

Demgegenüber liegt der Erfindung die Aufgabe zugrunde, ein hydraulisches System, insbesondere eine hydraulische Lenkungsvorrichtung, zu schaffen, das vorrichtungstechnisch einfach ausgestaltet ist und eine hohe Sicherheit aufweist. Des Weiteren liegt der Erfindung die Aufgabe zugrunde, ein Verfahren zur Steuerung des hydraulischen Systems zu schaffen, das sicher ist und mit einem geringen Aufwand ausführbar ist. Ferner liegt der Erfindung die Aufgabe zugrunde, eine mobile Arbeitsmaschine zu schaffen, die mit geringem vorrichtungstechnischem Aufwand sicher einsetzbar ist.

Die Aufgabe hinsichtlich des hydraulischen Systems wird gelöst gemäß den Merkmalen des Anspruchs 1, hinsichtlich des Verfahrens gemäß den Merkmalen des Anspruchs 6 und hinsichtlich der mobilen Arbeitsmaschine gemäß den Merkmalen des Anspruchs 15.

Erfindungsgemäß hat ein hydraulisches System, insbesondere eine hydraulische oder elektrohydraulische Lenkungsvorrichtung, eine Druckmittelversorgung, bei der es sich beispielsweise um eine Hydropumpe handelt. Über die Druckmittelversorgung ist über eine erste Zuleitung ein erster Anschluss eines Stellglieds zur Verstellung des Stellglieds in eine erste Richtung mit Druckmittel versorgbar. Über eine zweite Zuleitung ist ein zweiter Anschluss des Stellglieds zur Verstellung des Stellglieds in eine zweite Richtung mit der Druckmittelversorgung verbindbar. Des Weiteren sind der erste Anschluss über eine erste Rückleitung und der zweite Anschluss über eine zweite Rückleitung mit einer Druckmittelsenke, insbesondere einem Tank, verbindbar. In einer jeweiligen Zuleitung und einer jeweiligen Rückleitung ist ein Ventil oder sind mehrere fluidisch parallel angeordnete Ventile zum Steuern eines Druckmittelvolumenstroms vorgesehen. Über einen Drucksensor ist ein Versorgungsdruck der Druckmittelversorgung, insbesondere ein Pumpendruck der Hydropumpe, und/oder ein Lastdruck des Stellglieds als Ist-Druck von einer Steuervorrichtung erfassbar. Von dieser wird der Ist-Druck zur Fehlererkennung mit einem Soll-Druck bei einer bestimmten Ansteuerung beziehungsweise bei einem bestimmten Steuermuster der Ventile verglichen.

Diese Lösung hat den Vorteil, dass zur Fehlererkennung vorrichtungstechnisch äußerst einfach nur ein Drucksensor notwendig ist. Fehler des hydraulischen Systems werden insbesondere durch einen aktiven Selbsttest des hydraulischen Systems erkannt. In geeigneter Weise können die Ventile nacheinander mit Steuermustern angesteuert werden, um aus der Systemreaktion bzw. Änderung des vom Drucksensor gemessenen Drucks auf Fehler und Fehlerfreiheit von der Steuervorrichtung zu schließen. Dabei werden beispielsweise ein Ventil in der Zuleitung geöffnet, um einen Druckanstieg zu provozieren bzw. zu erfassen und im Anschluss daran ein Ventil in der Rückleitung geöffnet, um einen Druckabfall zu provozieren bzw. zu erkennen. Der aktive Selbsttest erfolgt vorzugsweise nicht in einem normalen Betrieb des hydraulischen Systems.

Mit dem erfindungsgemäßen hydraulischen System kann somit vorteilhafterweise durch eine bestimmte Ansteuerung eines oder mehrerer Ventile aufgrund von Messwerten eines einzelnen Drucksensors auf Fehler der Steuervorrichtung geschlossen werden.

Mit Vorteil ist das Stellglied ein Lenkzylinder, der insbesondere als Gleichgangzylinder ausgebildet ist, mit einem zwei Steuerkammern voneinander trennenden Kolben, wobei die Steuerkammern mit einem jeweiligen Anschluss verbunden sind.

Vorzugsweise werden bei dem Lenkzylinder zur Fehlererkennung nur Ventile in einer Zu- und Rückleitung eines gemeinsamen Anschlusses betätigt. Die Ventile in der Zu- und Rückleitung des anderen Anschlusses sind hierbei geschlossen, wodurch der Kolben des Lenkzylinders sich in der Regel nicht verschiebt, außer es liegt ein Fehler bei den Ventilen des zweiten Anschlusses vor (oder durch die Kompressibilität des Druckmittels). Somit kann eine Funktionsfähigkeit der Ventile geprüft werden, ohne dass der Kolben des Lenkzylinders eine möglicherweise gefahrbringende Bewegung vollzieht.

Zusätzlich zum Drucksensor kann ein Sensor zum Messen eines Stellungs-IstWerts des Stellglieds vorgesehen sein. Bei dem Sensor handelt es sich beispielsweise um einen Wegaufnehmer, der einen Verschiebeweg des Kolbens des Lenkzylinders als Stellungs-Ist-Wert misst. Weicht der Stellungs-Ist-Wert hierbei von einem Stellungs-Soll-Wert ab, insbesondere bei einer Prüfung der Funktionsfähigkeit der Ventile des hydraulischen Systems, so wird dies von der Steuervorrichtung als Fehler erkannt.

In weiterer Ausgestaltung der Erfindung ist als Druckmittelversorgung eine Verstellpumpe vorgesehen, die von einem Pumpenregler verstellbar ist, mit dem ein höchster Lastdruck (Load Sensing (LS) -Druck) mit dem Pumpendruck verglichen wird. Die Fehlererkennung kann sich somit die Tatsache zunutze machen, dass bei dem hydraulischen System mit einem variablen Druckniveau der Lastdruck bei einer Lenkanforderung ansteigt. Aus der Veränderung des Lastdrucks bei der Prüfung der Ventile kann dann auf die Funktionsfähigkeit der Ventile geschlossen werden. Hierfür ist es ausreichend, wenn der Drucksensor einfach den LS-Druck in einer den höchsten Lastdruck zum Pumpenregler meldenden LS-Leitung oder den Versorgungsdruck in der Pumpenleitung misst.

Erfindungsgemäß erfolgt bei einem Verfahren zum Steuern des erfindungsgemäßen hydraulischen Systems zur Fehlererkennung die Ansteuerung der Ventile derart, dass die Aktuatoren der Ventile unbetätigt sind oder zumindest ein Aktuator eines Ventils in einer Zuleitung betätigt ist. Bei den Ventilen handelt es sich vorzugsweise um Ventile mit einem Ventilschieber oder Stößel, der über eine Ventilfeder mit einer Federkraft in Richtung einer Schließstellung beaufschlagt und über einen Aktuator, insbesondere über einen elektrisch betätigbaren Aktuator, in eine Öffnungsstellung bringbar ist.

Diese Lösung hat den Vorteil, dass bei unbetätigten Ventilen mit äußerst geringem vorrichtungstechnischem Aufwand erkennbar ist, ob Ventilschieber der Ventile in den Zuleitungen nicht mehr vollständig schließen, da dies zu einem Druckanstieg des Lastdrucks führen würde, der von der Steuervorrichtung über den Drucksensor erfassbar ist. Wird ein Ventil über seinen Aktuator betätigt, so kann vorrichtungstechnisch ebenfalls äußerst einfach erkannt werden, ob der Ventilschieber des Ventils nicht oder nicht weit genug geöffnet ist.

Bevorzugterweise erkennt die Steuervorrichtung einen Fehler bei unbetätigten Aktuatoren der Ventile, wenn der Ist-Druck größer als der vorgegebene Soll-Druck, insbesondere nach und/oder während einer vorgegebenen Zeit, ist. Hierbei ist denkbar, dass ein Fehler von der Steuervorrichtung erst erkannt wird, wenn sich der Ist-Druck mit einer bestimmten Größe von dem Soll-Druck unterscheidet. Des Weiteren kann von der Steuervorrichtung bei unbetätigten Aktuatoren der Ventile ein Fehler erkannt werden, wenn der Ist-Druck, insbesondere nach und/oder während einer vorgegebenen Zeit, um einen bestimmten Wert ansteigt. Durch eine derartige Prüfung des Ist-Drucks bei unbetätigten Aktuatoren der Ventile kann somit auf einfache Weise festgestellt werden, ob ein Ventilschieber eines oder mehrerer Ventile der Zuleitungen nicht mehr in ihre Schließstellung bringbar sind. Treffen die genannten Bedingungen, bei denen die Steuervorrichtung einen Fehler erkennt, nicht zu, so kann davon ausgegangen werden, dass die Ventilschieber der Ventile in den Zuleitungen vollständig in ihren Schließstellungen sind.

In weiterer Ausgestaltung der Erfindung erkennt die Steuervorrichtung einen Fehler, wenn bei einem betätigten Aktuator zumindest eines Ventils in einer Zuleitung der Ist-Druck kleiner als der vorgegebene Soll-Druck und/oder der Ist-Druck von dem vorgegebenen Soll-Druck eine bestimmte Abweichung aufweist und/oder der Ist-Druck um einen bestimmten Wert nicht ansteigt. Hierbei wird insbesondere der Ist-Druck nach und/oder während einer vorgegebenen Zeit untersucht. Trifft eine der Bedingungen bei einem betätigten Aktuator zumindest eines Ventils in einer Zuleitung zu, so kann davon ausgegangen werden, dass der Ventilschieber des betätigten Ventils nicht von seiner Schließposition weg bewegbar ist oder nicht vollständig in eine Öffnungsstellung bringbar ist. Treffen diese Bedingungen nicht zu, so wird davon ausgegangen, dass das betätigte Ventil vollständig öffnet und fehlerfrei ist.

Um alle Ventile in den Zuleitungen auf einfache Weise prüfen zu können, werden die Aktuatoren weiterer oder aller Ventile in den Zuleitungen nacheinander betätigt. Hierbei ist immer nur ein Aktuator eines Ventils betätigt.

Um die Ventile der Rückleitungen zu prüfen, wird zusätzlich zur Betätigung eines Aktuators eines Ventils in der Zuleitung eines Anschlusses des Stellglieds ein Aktuator eines Ventils in der Rückleitung des gleichen Anschlusses betätigt. Hierdurch ist vorteilhafterweise der andere Anschluss des Stellglieds sowohl zur Druckmittelversorgung als auch zur Druckmittelsenke abgesperrt, wodurch sich der Kolben bei Betätigung der Aktuatoren der zu prüfenden Ventile in der Zuleitung und der Rückleitung nicht verschieben kann. Ist das Stellglied beziehungsweise der Lenkzylinders mit Rädern einer mobilen Arbeitsmaschine gekoppelt, so werden bei der Betätigung der Aktuatoren der Ventile zur Fehlererkennung die gekoppelten Räder vorteilhafterweise nicht bewegt.

Mit Vorteil erkennt die Steuervorrichtung einen Fehler bei einer Betätigung eines Aktuators eines Ventils in der Zuleitung eines Anschlusses des Stellglieds und eines Aktuators eines Ventils in der Rückleitung des selben Anschlusses, wenn der Ist-Druck größer als der vorgegebene Soll-Druck ist und/oder wenn der Ist-Druck um einen bestimmten Wert nicht sinkt, wobei dies insbesondere nach und/oder während einer vorgegebenen Zeit geprüft wird. Somit kann auf einfache Weise erkannt werden, ob der Ventilschieber des bestätigten Ventils der Rückleitung nicht mehr oder nur teilweise in seine Öffnungsstellung bringbar ist.

Zur Überprüfung aller Ventile der Rückleitung des gleichen Anschlusses werden die Aktuatoren dieser Ventile nacheinander betätigt, wobei jeweils immer nur ein Aktuator eines Ventils in der Rückleitung des gleichen Anschlusses betätigt ist.

Zusätzlich zum Drucksensor kann der Sensor des Stellglieds den Stellungs-Ist-Wert des Stellglieds messen, woraus die Steuervorrichtung zusammen mit dem Stellungs-Soll-Wert zur Fehlererkennung eine Abweichung bildet. Verschiebt sich das Stellglied während der Prüfung der Ventile um einen nicht zugelassenen Wert, so wird das von der Steuervorrichtung erfasst und als Fehler angesehen.

Mit Vorteil führt die Erkennung eines Fehlers der Steuervorrichtung zur Deaktivierung aller Ventile, was einen äußerst sicheren Einsatz des hydraulischen Systems, insbesondere als Lenkvorrichtung, ermöglicht, da eine möglicherweise gefahrbringende Bewegung des Stellglieds durch die Deaktivierung unmittelbar unterbunden wird.

Erfindungsgemäß hat eine mobile Arbeitsmaschine wenigstens ein lenkbares Rad und weist ein erfindungsgemäßes hydraulisches System auf. Das Stellglied ist vorzugsweise zum Lenken des wenigstens einen Rades mit diesem gekoppelt. Eine derartige mobile Arbeitsmaschine kann äußerst sicher eingesetzt werden und mit geringem vorrichtungstechnischem Aufwand auf Fehler untersucht werden.

Sonstige vorteilhafte Weiterbildungen der Erfindung sind Gegenstand weiterer Unteransprüche.

Im Folgenden werden bevorzugte Ausführungsformen der Erfindung anhand schematischer Zeichnungen näher erläutert. Es zeigen:
Figur 1 einen elektrohydraulischen Schaltplan eines erfindungsgemäßen hydraulischen Systems gemäß einem ersten Ausführungsbeispiel;
Figur 2 einen elektrohydraulischen Schaltplan des erfindungsgemäßen hydraulischen Systems gemäß einem zweiten Ausführungsbeispiel und
Figur 3 einen hydraulischen Schaltplan einer alternativen Druckmittelversorgung der hydraulischen Systeme aus den Figuren 1 und 2.

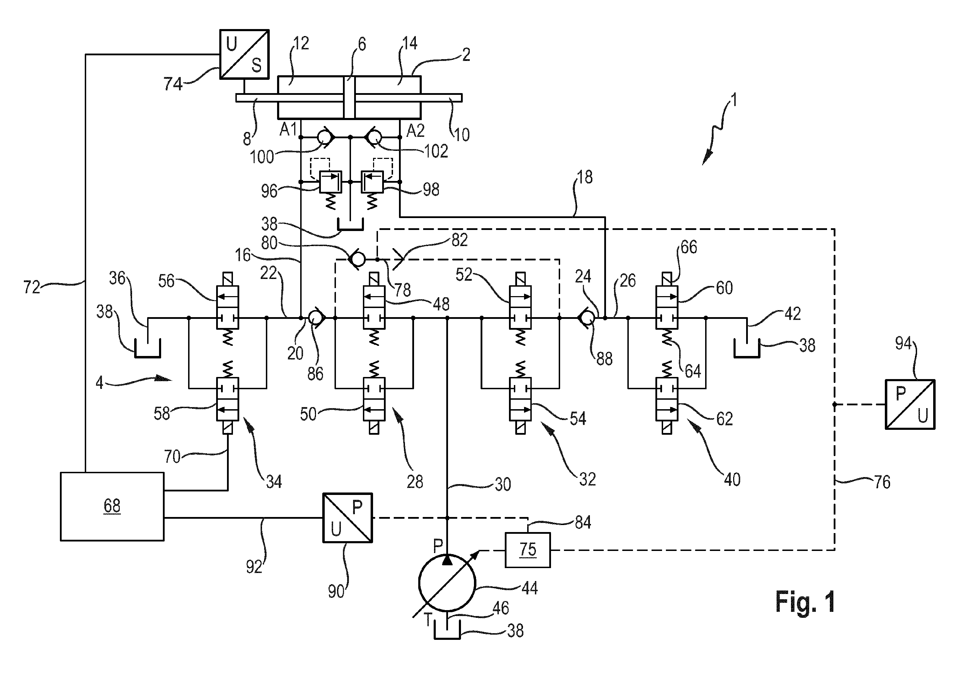

Gemäß Figur 1 ist ein erfindungsgemäßes hydraulisches System in Form einer hydraulischen Lenkungsvorrichtung 1 dargestellt. Diese hat ein Stellglied in Form eines als Gleichgangzylinder ausgebildeten Lenkzylinders 2, der über eine Ventilanordnung 4 gesteuert ist.

Der Lenkzylinder 2 hat einen Kolben 6 von dem beidseitig eine Kolbenstange 8 und 10 weg kragt. Der Kolben 6 begrenzt zusammen mit der Kolbenstange 8 beziehungsweise 10 zwei ringförmige Steuerkammern 12 beziehungsweise 14. Die in der Figur 1 linke Steuerkammer 12 ist über einen ersten Anschluss A1 mit einer Anschlussleitung 16 und die rechte Steuerkammer 14 über einen zweiten Anschluss A2 mit einer Anschlussleitung 18 verbunden. Die erste Anschlussleitung 16 verzweigt sich in eine erste Zuleitung 20 und eine erste Rückleitung 22. Die zweite Anschlussleitung 18 verzweigt sich in eine zweite Zuleitung 24 und eine zweite Rückleitung 26. Die erste Zuleitung 20 ist über eine erste Ventilgruppe 28 mit einer Pumpenleitung 30 verbunden. Die zweite Zuleitung 24 ist über eine zweite Ventilgruppe 32 ebenfalls mit der Pumpenleitung 30 verbunden. Die erste Rückleitung 22 ist über eine dritte Ventilgruppe 34 mit einer Tankleitung 36 verbunden, die mit einem Tank 38 in Druckmittelverbindung steht. Die zweite Rückleitung 26 ist über eine vierte Ventilgruppe 40 ebenfalls mit einer Tankleitung 42 verbunden, die an den Tank 38 angeschlossen ist. Die Pumpenleitung 30 ist an einem Pumpenanschluss P einer verstellbaren Hydropumpe 44 angeschlossen, über die Druckmittel von dem Tank 38, einer Tankleitung 46 und einen Tankanschluss T der Hydropumpe 44 in die Pumpenleitung 30 förderbar ist.

Die Ventilgruppen 28, 32, 34, 40 weisen jeweils zwei fluidisch parallel angeordnete Ventile 48, 50; 52, 54; 56, 58 beziehungsweise 60, 62 auf. Die als Schaltventile ausgebildeten Ventile 48 bis 62 sind 2/2-Wegeventile deren Ventilschieber über eine Ventilfeder 64 (siehe beispielsweise Ventil 60) in eine Schließstellung mit einer Federkraft beaufschlagt ist und über einen elektrischen Aktuator 66 in eine Öffnungsstellung bringbar ist. Denkbar wäre auch zusätzliche zu einer jeweiligen Ventilfeder der Ventile 48 bis 62 eine weitere redundante Ventilfeder vorzusehen, damit beim Ausfall einer Ventilfeder eine weitere Ventilfeder vorhanden ist, um den Ventilschieber in Richtung seiner Schließstellung mit einer Federkraft zu beaufschlagen. Die Ventile 48 bis 62 sind als Sitzventile ausgestaltet. Über eine Steuervorrichtung 68, insbesondere einer Electronic Control Unit (ECU), sind die Ventile 48 bis 62 jeweils mit einem pulsbreitenmodulierten Stromsignal ansteuerbar. Die Steuervorrichtung 68 kann ein P-Regler sein. Der effektive freie Strömungsquerschnitt der Ventile 48 bis 62 ist bei dieser gepulsten Ansteuerung der zeitlich gemittelte Strömungsquerschnitt dieser Ventile. Die Steuervorrichtung 68 ist über eine jeweilige elektrische Steuerleitung 70 mit einem jeweiligen elektrischen Aktuator 66 der Ventile 48 bis 62 verbunden, wobei der besseren Darstellbarkeit halber lediglich eine Steuerleitung 70 in der Figur 1 zwischen der Steuervorrichtung 68 und dem Ventil 58 eingezeichnet ist. Der besseren Darstellbarkeit halber ist auch nur ein elektrischer Aktuator 66 mit einem Bezugszeichen versehen.

Die Steuervorrichtung 68 ist über eine Signalleitung 72 mit einem Sensor in Form eines Wegaufnehmers 74 verbunden. Dieser misst einen Verschiebeweg des Kolbens 6 über seine in der Figur 1 linke Kolbenstange 8 und meldet diesen als Stellungsistwert x_ist an die Steuervorrichtung 68. Ist der Kolben 6 mittig in seiner Neutralstellung, so ist der Stellungsistwert x_ist Null. Wird der Kolben 6 in der Figur 1 nach rechts verschoben, dass heißt Druckmittel strömt in die Steuerkammer 12 ein und aus der Steuerkammer 14 aus, so ist der Stellungsistwert x_ist größer Null und steigt im Wesentlichen linear zum Verschiebeweg. Wird der Kolben 6 von seiner Neutralstellung in der Figur 1 aus nach links verschoben, dass heißt Druckmittel strömt in die Steuerkammer 14 ein und aus der Steuerkammer 12 aus, so ist der Stellungsistwert x_ist kleiner Null und sinkt im Wesentlichen linear mit dem Verschiebeweg des Kolbens 6. Der Stellungsistwert x_ist wird in der Steuervorrichtung 8 mit einem vorgegebenen Stellungssollwert x_soll verglichen und daraus eine Regeldifferenz aus Stellungsistwert x_ist und dem Stellungssollwert x_soll gebildet, um daraus entsprechend dem Regelgesetz eine Stellgröße u zur Steuerung der Ventile 48 bis 62 zu berechnen, wobei die Stellgröße u einem bestimmten Puls-Pausen-Verhältnis bei der pulsweitenmodulierten Ansteuerung entspricht. Der Stellungssollwert x_soll wird beispielsweise von einem Bediener der elektrohydraulischen Lenkungsvorrichtung 1 durch Verschwenken eines Lenkrads oder eines Steuerhebels vorgegeben.

Die verstellbare Hydropumpe 44 wird auf herkömmliche Weise über einen Druckregler 75 eingestellt, an den über eine Load-Sensing (LS)-Leitung 76 der höchste Lastdruck der Steuerkammern 12 bzw. 14 gemeldet wird. Die LS-Leitung 76 ist hierzu mit einem Ausgang eines Wechselventils 78 verbunden, dessen erster Eingangsanschluss 80 mit der ersten Zuleitung 20 zwischen der Anschlussleitung 16 und der Ventilgruppe 28 und dessen zweiter Eingangsanschluss 82 mit der Zuleitung 24 zwischen der Anschlussleitung 18 und der Ventilgruppe 32 verbunden ist. Des Weiteren ist der Druckregler 75 mit einer Druckmeldeleitung 84 verbunden, die den Druck von der Pumpenleitung 30 abgreift. Zwischen dem Anschluss des ersten Eingangsanschlusses des Wechselventils 78 an der Zuleitung 20 und der Anschlussleitung 16 ist in der Zuleitung 20 ein sich in Druckmittelströmungsrichtung hin zum Lenkzylinder 2 öffnendes Rückschlagventil 86 angeordnet. Ein weiteres Rückschlagventil 88 ist in der Zuleitung 24 zwischen der Anschlussstelle des zweiten Eingangsanschlusses 82 des Wechselventils 78 und der Anschlussleitung 18 vorgesehen, das in einer Druckmittelströmungsrichtung hin zum Lenkzylinder 2 öffnet. Die Rückschlagventile 86 und 88 dienen dazu, dass der Abgriff des LS-Drucks nur im Zulauf vorgesehen ist.

Über einen ersten Drucksensor 90 wird ein Pumpendruck in der Pumpenleitung 30 stromabwärts der Hydropumpe 44 abgegriffen und über eine Meldeleitung 92 der Steuervorrichtung 68 gemeldet. Ein weiterer Drucksensor 94 greift den LS-Druck, also den höchsten Lastdruck des Lenkzylinders 2, von der LS-Leitung 76 zwischen dem Wechselventil 78 und dem Druckregler 75 ab und meldet diesen ebenfalls über eine nicht dargestellte Meldeleitung an die Steuervorrichtung 68. Der Drucksensor 94 kann hierbei zusätzlich oder alternativ zum Drucksensor 90 eingesetzt werden.

Der Lenkzylinder 2 ist mit zumindest einem lenkbaren Rad einer mobilen Arbeitsmaschine gekoppelt, wodurch das Rad bei einer Auslenkung des Kolbens 6 gelenkt wird.

Zwischen den Anschlussleitungen 16 und 18 sind gesetzlich für eine Lenkungsvorrichtung vorgeschriebene Druckbegrenzungsventile 96 und 98 und Nachsaugventile 100 und 102 bei der Lenkungsvorrichtung 1 vorgesehen. Das in der Figur 1 linke Druckbegrenzungsventil 96 öffnet hierbei ab einem bestimmten Druck in der Anschlussleitung 16 eine Druckmittelverbindung zwischen der Anschlussleitung 16 und dem Tank 38. Mit dem rechten Druckbegrenzungsventil 98 wird eine Druckmittelverbindung zwischen der Anschlussleitung 18 und dem Tank 38 bei einem bestimmten Druck in der Anschlussleitung 18 geöffnet. Das in der Figur 1 linke Nachsaugventil 100 ist als Rückschlagventil ausgebildet, das sich in einer Druckmittelströmungsrichtung hin zur Anschlussleitung 16 öffnet, wodurch Druckmittel vom Tank 38 nachgesaugt werden kann. Das rechte Nachsaugventil 100 ist als ein sich in Druckmittelströmungsrichtung hin zur Anschlussleitung 18 öffnendes Rückschlagventil ausgebildet, über das ebenfalls zum Tank 38 Druckmittel nachgesaugt werden kann.

Soll der Kolben 6 des Lenkzylinders 2 in der Figur 1 nach rechts verschoben werden, so wird der Steuervorrichtung 68 über in der Figur 1 nicht dargestellte Mittel der Stellungssollwert x_soll vorgegeben, der größer Null ist. Über den Wegaufnehmer 74 wird kontinuierlich der Stellungsistwert x_ist gemessen und eine Regeldifferenz gebildet. Diese ist dabei so lange größer Null, solange sich der Stellungsistwert x_ist vom Stellungssollwert x_soll unterscheidet. Ist die aus der Regeldifferenz gebildete Stellgröße u größer Null, so werden die Ventile 48 und 50 der ersten Ventilgruppe 28 und die Ventile 60 und 62 der vierten Ventilgruppe 40 geöffnet, womit Druckmittel von der Hydropumpe 44 in die linke Steuerkammer 12 und aus der rechten Steuerkammer 14 zum Tank 38 strömt. Ein effektiver freier Strömungsquerschnitt der aufgesteuerten Ventile 48, 50, 60 und 62 ist dabei im Wesentlichen proportional zur Größe der Stellgröße u. Das heißt je größer die Stellgröße u, also je größer die Regeldifferenz, desto größer ist auch der effektive freie Strömungsquerschnitt. Ist die Stellgröße u Null, dass heißt, der Stellungssollwert x_soll entspricht dem Stellungsistwert x_ist, so sind die Ventile 48, 50, 60 und 62 wieder geschlossen.

Soll der Kolben 6 des Lenkzylinders 2 in die entgegen gesetzte Richtung verschoben werden, dann ist eine Regeldifferenz kleiner Null, wodurch die Ventile 52, 54 der zweiten Ventilgruppe und die Ventile 56 und 58 der dritten Ventilgruppe geöffnet sind. Hierdurch kann Druckmittel von der Pumpe 44 in die in der Figur 1 rechte Steuerkammer 14 und aus der linken Steuerkammer 12 zum Tank 38 strömen. Auch hierbei gilt, dass ein effektiver freier Strömungsquerschnitt der Ventile 48, 50, 56 und 58 im Wesentlichen proportional zur Stellgröße u ist.

Im Folgenden wird die Funktionsweise der erfindungsgemäßen hydraulischen Lenkungsvorrichtung 1 erläutert. Zur Überprüfung beziehungsweise zur Fehlererkennung der Ventile 48 bis 62 wird die Lenkungsvorrichtung 1 außerhalb ihres normalen Betriebs untersucht, wobei insbesondere untersucht wird, ob die Ventile 48 bis 62 fehlerfrei öffnen und schließen. Generell gilt, dass bei der Fehlererkennung eine Verschiebung des Kolbens 6 über den Wegaufnehmer 74 von der Steuervorrichtung 68 überwacht wird. Verschiebt sich der Kolben 6 hierbei, so wird dies von der Steuervorrichtung 68 als Fehler erkannt.

Zum Prüfen der Ventile 48 bis 54 in den Zuleitungen 20 und 24 ist keines der Ventile 48 bis 62 betätigt, wodurch eine Druckmittelverbindung zwischen den Steuerkammern 12 und 14 mit der Hydropumpe 44 gesperrt ist. Wird hierbei von dem Drucksensor 90 und/oder vom Drucksensor 94 ein hoher, über einen im Normalzustand, d. h. bei einer fehlerfreien Lenkungsvorrichtung 1, vorherrschenden Soll-Druck liegender Ist-Druck gemessen oder steigt der Ist-Druck an, so kann daraus geschlossen werden, dass ein Ventilschieber zumindest eines der Ventile 48 bis 54 in den Zuleitungen 20 und 24 nicht mehr oder nicht mehr vollständig in seine Schließposition bringbar ist. Dieser hohe oder ansteigende Ist-Druck wird dann von der Steuervorrichtung 18 als Fehler erkannt und die Fehlererkennung kann abgebrochen werden. Beim Abbruch der Fehlererkennung sind dann alle Ventile 48 bis 62 zur Sicherheit unbetätigt. Liegt allerdings kein hoher Ist-Druck vor und steigt der Ist-Druck nicht an, so kann daraus gefolgert werden, dass die Ventilschieber der Ventile 48 bis 54 in den Zuleitungen 20 und 24 vollständig schließen. Die Fehlererkennung wird dann fortgesetzt.

Im Anschluss wird nun geprüft, ob die Ventilschieber der Zulaufventile 48 bis 54 in den Zuleitungen 20 und 22 vollständig bzw. weit genug in eine Öffnungsstellung bringbar sind. Hierzu werden nacheinander die Zulaufventile 48 bis 54 betätigt, wobei jeweils immer nur ein Zulaufventil 48 bis 54 betätigt ist. Liegt der von dem Drucksensor 90 und/oder von dem Drucksensor 94 gemessene Ist-Druck bei einer Betätigung eines der Ventile 48 bis 54 unter einem im Normalzustand auftretenden Soll-Druck und steigt der Ist-Druck nicht an, so kann daraus geschlossen werden, dass das gerade betätigte Ventil der Ventile 48 bis 54 nicht mehr weit genug öffnet. Dies wird von der Steuervorrichtung 68 als Fehler erkannt und führt zu einem Abbruch der Fehlererkennung, wobei dann wieder alle Ventile 48 bis 62 zur Sicherheit unbetätigt sind. Entspricht dagegen der Ist-Wert einem Soll-Wert im Normalzustand bzw. steigt der Ist-Wert bei einem jeweilig betätigten Ventil 48 bis 54 an, so kann davon ausgegangen werden, dass diese weit genug öffnen.

In einem nächsten Schritt der Fehlererkennung werden die Ventile 56 bis 62 in den Rückleitungen 22 und 26 untersucht. Zur Untersuchung der Ventile 56 und 58, die der in der Figur 1 linken Steuerkammer 12 des Lenkzylinders 2 zugeordnet sind, sind die Ventile 52, 54, 60 und 62, die der rechten Steuerkammer 14 zugeordnet sind, unbetätigt, womit ihr Ventilschieber in seiner Schließposition ist. Des Weiteren sind eines oder beide der Ventile 48 und 50 in der Zuleitung 20 betätigt. Nun werden nacheinander das Ventil 56 und 58 in der Rückleitung 22 betätigt. Ist bei einer Betätigung eines der Ventile 56 und 58 ein von dem Drucksensor 90 und/oder dem Drucksensor 94 gemessener Ist-Druck größer als ein im Normalzustand auftretender Soll-Druck oder sinkt der Ist-Druck nicht, so kann daraus geschlossen werden, dass der Ventilschieber des betätigten Ventils 56 oder 58 nicht mehr oder nicht weit genug in seine Öffnungsstellung verschiebbar ist. Dies wird von der Steuervorrichtung 68 als Fehler erkannt und als Folge werden wieder alle Ventile 48 bis 62 unbetätigt. Entsprechend erfolgt die Fehlererkennung der Ventile 60 und 62 in der Rückleitung 26. Hierzu sind die in der Figur 1 linken Steuerkammer 12 zugeordneten Ventile 48, 50, 56 und 58 geschlossen und eines oder beide Ventile 52 und 54 in der Zuleitung 24 zur Steuerkammer 14 sind geöffnet. Im Anschluss daran werden nacheinander die Ventile 60 und 62 in der Rückleitung 26 betätigt. Liegt dabei ein von dem Drucksensor 90 und/oder von dem Drucksensor 94 gemessener Ist-Druck über einem im Normalzustand auftretenden Soll-Druck oder sinkt der Ist-Druck nicht ab, so wird von der Steuervorrichtung 68 erkannt, dass ein Ventilschieber des betätigten Ventils 60 oder 62 nicht oder nicht mehr vollständig in seine Öffnungsstellung verschiebbar ist. Ist dies der Fall werden wieder alle Ventile 48 bis 62 unbetätigt. Sinkt dagegen der Ist-Druck und/oder entspricht einem im Normalzustand auftretenden Soll-Druck, so wird von einer Funktionstüchtigkeit der betätigten Ventile 56, 58, 60 und 62 ausgegangen. Die Fehlererkennung ist damit abgeschlossen.

Selbstverständlich kann die Fehlererkennung in einer anderen Reihenfolge als der oben beschriebenen Reihenfolge erfolgen. Es ist auch denkbar, nur einzelne Testmuster vorzunehmen oder die Schritte miteinander zu vermischen.

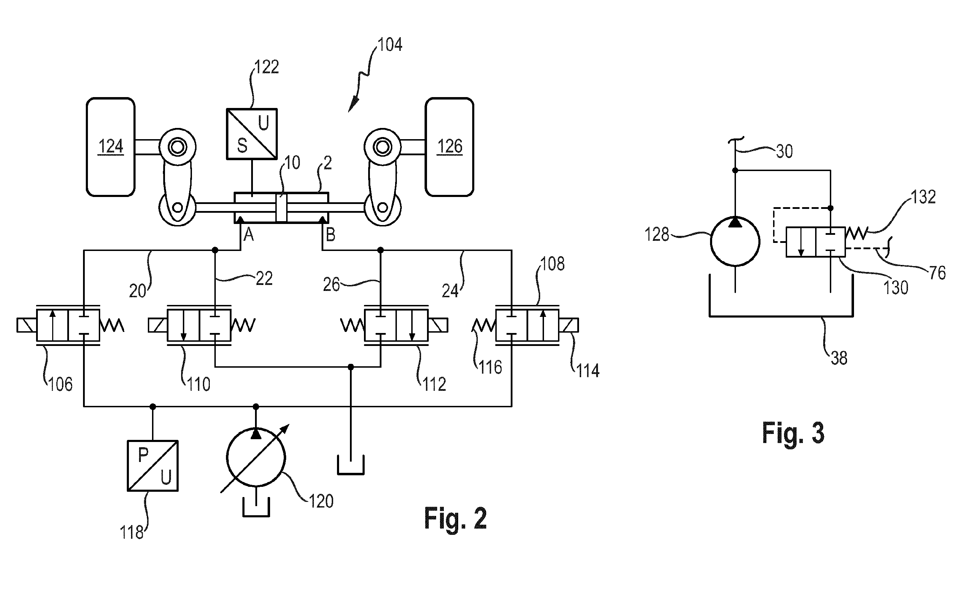

In der Figur 2 ist eine Lenkungsvorrichtung 104 dargestellt, bei der im Unterschied zur Figur 1 in den Zu- und Rückleitungen 20, 24; 22, 26 nur ein Ventil 106, 108, 110 bzw. 112 angeordnet ist. Bei den Ventilen 106 bis 112 handelt es sich auch nicht um Schaltventile, sondern um elektromagnetisch über einen Aktuator 114 betätigbare Proportionalventile, die als 2/2-Wegeventile eingesetzt sind. Ein Ventilschieber eines jeweiligen Ventils 106 bis 112 ist über einen jeweiligen Aktuator 114, von denen der Übersichtlichkeit halber nur einer in der Figur 2 mit einem Bezugszeichen versehen ist, in Richtung von Öffnungsstellung verschiebbar und jeweils über eine Ventilfeder 116, von denen ebenfalls nur eine mit einem Bezugszeichen versehen ist, in Richtung einer Schließstellung mit einer Federkraft beaufschlagt. Über eine nicht dargestellte Steuervorrichtung werden die Ventile 106 bis 112 gesteuert. An die Steuervorrichtung wird des Weiteren ein von einem Drucksensor 118 gemessener Pumpendruck zwischen einer verstellbaren Hydropumpe 120 und den in den Zulaufleitungen 20 und 24 angeordneten Ventilen 106 bzw. 108 gemeldet, um eine Fehlererkennung entsprechend der Figur 1 durchführen zu können. Des Weiteren ist ein Wegaufnehmer 122 vorgesehen, um einen Verschiebeweg des Kolbens 10 des Lenkzylinders 2 zu bestimmen. Der Lenkzylinder 2 dient zum Lenken von zwei Rädern 124 und 126, die mit diesem gekoppelt sind.

Die Fehlererkennung erfolgt entsprechend der Lenkungsvorrichtung 1 aus Figur 1. Zur Fehlererkennung sind entweder alle Ventile 106 bis 112 unbetätigt und/oder die Ventile 106 und 108 in den Zuleitungen 20 und 24 werden nacheinander betätigt und/oder zusätzlich zum betätigten Ventil 106 oder 108 in der Zuleitung 20 bzw. 24 wird das Ventil 110 oder 112 in der Rückleitung 22 bzw. 26 betätigt.

Gemäß der Figur 3 ist eine Hydropumpe 128 in Form einer Konstantpumpe dargestellt, die anstelle der Hydropumpe 44 aus Figur 1 oder der Hydropumpe 120 aus Figur 2 einsetzbar ist. Anstatt des Druckreglers 75 aus Figur 1 ist dann ein proportional verstellbares 2/2-Wegeventil 130 vorgesehen, dessen Ventilschieber in Richtung seiner Schließstellung mit einer Federkraft einer Ventilfeder 132 beaufschlagt ist. In Öffnungsrichtung wird der Ventilschieber vom Druck in der Pumpenleitung 30 beaufschlagt. Des Weiteren wird der Ventilschieber in Richtung seiner Schließstellung vom LS-Druck über die LS-Leitung 76 beaufschlagt. Über das Wegeventil 130 ist dann eine Verbindung zwischen der Pumpenleitung 30 und dem Tank 38 steuerbar.

Offenbart ist ein hydraulisches System mit einem Stellglied in Form eines Lenkzylinders. Ein erster Anschluss des Stellglieds zur Verstellung des Stellglieds in eine erste Richtung ist über eine erste Zuleitung mit einer Druckmittelversorgung verbindbar. Über eine zweite Zuleitung ist ein zweiter Anschluss des Stellglieds mit der Druckmittelversorgung verbindbar. Über eine jeweilige Rückleitung ist ein jeweiliger Anschluss mit einer Druckmittelsenke verbindbar. In einer jeweiligen Zuleitung und einer jeweiligen Rückleitung ist zumindest ein Ventil zum Steuern eines Druckmittelvolumenstroms vorgesehen. Über eine Steuervorrichtung ist über einen Drucksensor ein Systemdruck erfassbar, mit dem bei einer bestimmten Ansteuerung der Ventile auf Fehler der Ventile geschlossen werden kann.

### Bezugszeichenliste:

| | |
|---|---|
| 1 | Lenkungsvorrichtung |
| 2 | Lenkzylinder |
| 4 | Ventilanordnung |
| 6 | Kolben |
| 8 | Kolbenstange |
| 10 | Kolbens |
| 12 | Steuerkammer |
| 14 | Steuerkammer |
| 16 | Anschlussleitung |
| 18 | Anschlussleitung |
| 20 | Zuleitung |
| 22 | Rückleitung |
| 24 | Zuleitung |
| 26 | Rückleitung |
| 28 | Ventilgruppe |
| 30 | Pumpenleitung |
| 32 | Ventilgruppe |
| 34 | Ventilgruppe |
| 36 | Tankleitung |
| 38 | Tank |
| 40 | Ventilgruppe |
| 42 | Tankleitung |
| 44 | Hydropumpe |
| 46 | Tankleitung |
| 48 | Ventil |
| 50 | Ventil |
| 52 | Ventil |
| 54 | Ventil |
| 56 | Ventil |
| 58 | Ventil |
| 60 | Ventil |
| 62 | Ventil |
| 64 | Ventilfeder |
| 66 | Aktuator |
| 68 | Steuervorrichtung |
| 70 | Steuerleitung |
| 72 | Signalleitung |
| 74 | Wegaufnehmer |
| 75 | Druckregler |
| 76 | LS-Leitung |
| 78 | Wechselventil |
| 80 | erster Eingangsanschluss |
| 82 | zweiter Eingangsanschluss |
| 84 | Druckmeldeleitung |
| 86 | Rückschlagventil |
| 88 | Rückschlagventil |
| 90 | Drucksensor |
| 92 | Meldeleitung |
| 94 | Drucksensor |
| 96 | Druckbegrenzungsventil |
| 98 | Druckbegrenzungsventil |
| 100 | Nachsaugventil |
| 102 | Nachsaugventil |
| 104 | Lenkungsvorrichtung |
| 106 | Ventil |
| 108 | Ventil |
| 110 | Ventil |
| 112 | Ventil |
| 114 | Aktuator |
| 116 | Ventilfeder |
| 118 | Drucksensoer |
| 120 | Hydropumpe |
| 122 | Wegaufnehmer |
| 124 | Rad |
| 126 | Rad |
| 128 | Hydropumpe |
| 130 | Wegeventil |
| 132 | Ventilfeder |
| A1 | erster Anschluss |
| A2 | zweiter Anschluss |
| P | Pumpenanschluss |
| T | Tankanschluss |
| x_ist | Stellungsistwert |
| x_soll | Stellungssollwert |
| u | Stellgröße |

## Patentansprüche

1. Hydraulisches System mit einer Druckmittelversorgung (44), von der über eine erste Zuleitung (20) ein erster Anschluss (A1) eines Stellglieds (2) und über eine zweite Zuleitung (24) ein zweiter Anschluss (A2) des Stellglieds (2) mit Druckmittel versorgbar sind, und wobei der erste Anschluss (A1) über eine erste Rückleitung (22) und der zweite Anschluss (A2) über eine zweite Rückleitung (26) mit einer Druckmittelsenke (38) verbindbar sind, wobei in einer jeweiligen Zuleitung (20, 24) und einer jeweiligen Rückleitung (22, 26) ein Ventil (56 - 62) oder mehrere fludisch parallel angeordnete Ventile (56 - 62) zum Steuern eines Druckmittelvolumenstroms vorgesehen sind, **dadurch gekennzeichnet, dass** eine Steuervorrichtung (68) über einen Drucksensor (90; 94) einen Systemdruck, insbesdonderen einen Pumpondruck und/oder einen Lastdruck des Stellglieds (2), als Ist-Druck erfasst und zur Fehlererkennung mit einem vorgegebenen Soll-Druck bei einer bestimmten Ansteuerung der Ventile (48 - 62) vergleicht.

2. System nach Anspruch 1, wobei das Stellglied (2) ein Lenkzylinder (2) ist, der einen zwei Steuerkammern (12, 14) voneinander trennenden Kolben (6) aufweist, wobei die Steuerkammern (12, 14) mit einem jeweiligen Anschluss (A1, A2) verbunden sind.

3. System nach Anspruch 1 oder 2, wobei ein Sensor (74) zum Messen eines Stellungs-Ist-Werts des Stellglieds (2) vorgesehen ist.

4. System nach einem der vorhergehenden Ansprüche, wobei als Druckmittelversorgung eine verstellbare bzw. verschwenkbare Hydropumpe (44) vorgesehen ist, die von einem Pumpenregler (75) verstellbar ist, mit dem ein höchster Lastdruck und der Pumpendruck verglichen ist.

5. Verfahren zum Steuern eines hydraulischen Systems gemäß einem der vorhergenden Ansprüche, wobei ein Ventilschieber eines jeweiligen Ventils (48 - 62) über eine Ventilfeder (64) mit einer Federkraft in Richtung einer Schließstellung beaufschlagt ist und über einen Aktuator (66) in eine Öffnungsstellung bringbar ist, wobei zur Fehlererkennung die Ansteuerung der Ventile (48 - 62) durch die Steuervorrichtung (68) derart erfolgt, dass die Aktuatoren (66) der Ventile (48- 62) unbetätigt sind oder zumindest ein Aktuator (66) eines Ventils (48 - 62) in einer Zuleitung (20, 24) betätigt ist.

6. Verfahren nach Anspruch 5, wobei bei unbetätigten Aktuatoren (66) der Ventile (48 - 62) die Steuervorrichtung (68) einen Fehler erkennt, wenn der Ist-Druck größer als der vorgegebene Soll-Druck, insbesondere nach und/oder während einer vorgegebenen Zeit ist, und/oder der Ist-Druck von dem vorgegebenen Soll-Druck eine bestimmte Abweichung, insbesondere nach und/oder während einer vorgegebenen Zeit aufweist, und/oder der Ist-Druck um einen bestimmten Wert oder mit einer bestimmen Rate, insbesondere nach und/oder während einer vorgegebenen Zeit, ansteigt.

7. Verfahren nach Anspruch 5 oder 6, wobei bei einem betätigten Aktuator (66) zumindest eines Ventils (48 - 54) in einer Zuleitung (20, 24) die Steuervorrichtung (68) einen Fehler erkennt, wenn der Ist-Druck kleiner als der vorgegebene Soll-Druck, insbesondere nach und/oder während einer vorgegebenen Zeit, ist und/oder der Ist-Druck von dem vorgegebenen Soll-Druck eine bestimmte Abweichung, insbesondere nach und/oder während einer vorgegebenen Zeit, aufweist und/oder der Ist-Druck um einen bestimmten Wert oder mit einer bestimmen Rate, insbesondere nach und/oder während einer vorgegebenen Zeit, nicht ansteigt.

8. Verfahren nach Anspruch 5 oder 7, wobei die Aktuatoren (66) weiterer oder aller Ventile (48 - 54) in den Zuleitungen (20, 24) nacheinander betätigt werden, wobei jeweils nur ein Aktuator (66) betätigt ist.

9. Verfahren nach Anspruch 5, 7 oder 8, wobei zusätzlich zur Betätigung eins Aktuators (66) eines Ventils (48 - 54) in der Zuleitung (20, 24) eines Anschlusses (A1, A2) des Stellgliedes (2) ein Aktuator (66) eines Ventils (56, 58; 60, 62) in der Rückleitung (22; 26) des gleichen Anschlusses (A1; A2) bestätigt ist.

10. Verfahren nach Anspruch 9, wobei bei einer Betätigung eines Aktuators (66) eines Ventils (48, 50; 52, 54) in der Zuleitung (20; 24) eines Anschlusses (A1; A2) des Stellglieds (2) und eines Aktuators (66) eines Ventils (56, 58; 60, 62) in der Rückleitung (22; 26) des gleichen Anschlusses (A1; A2) von der Steuervorrichtung (68) ein Fehler erkannt wird, wenn der Ist-Druck größer als der vorgegebene Soll-Druck, insbesondere nach und/oder während einer vorgegebenen Zeit, ist und/oder wenn der Ist-Druck um einen bestimmten Wert oder mit einer bestimmten Rate, insbesondere nach und/oder während einer vorgegebenen Zeit, nicht sinkt.

11. Verfahren nach Anspruch 9 oder 10, wobei die Aktuatoren (66) aller Ventile (56, 58; 60, 62) in der Rückleitung (22;26) des gleichen Anschlusses (A1; A2) nacheinander betätigt werden, wobei jeweils nur ein Aktuator (66) eines Ventils (56, 58; 60, 62) in der Rückleitung (22;26) des gleichen Anschlusses (A1; A2) betätigt ist.

12. Verfahren nach einem der Ansprüche 5 bis 11, wobei zusätzlich der Sensor (74) den Stellungs-Ist-Wert des Stellglieds (2) misst und die Steuervorrichtung (68) daraus zusammen mit einem Stellungs-Soll-Wert zur Fehlererkennung eine Abweichung bildet und von der Steuervorrichtung (68) ein Fehler erkannt wird, wenn diese Abweichung einen gewissen Wert überschreitet.

13. Verfahren nach einem der Ansprüche 5 bis 12, wobei die Erkennung eines Fehlers der Steuervorrichtung (68) zur Unbetätigung aller Ventile (48 - 62) führt.

14. Mobile Arbeitsmachine mit wenigstens einem lenkbaren Rad (124, 126), das ein hydraulisches System gemäß einem der Ansprüche 1 bis 4 aufweist, wobei das Stellglied (2) zum Lenken des wenigstens einen Rads (124, 126) mit diesem gekoppelt ist.
